# FASCICULE DE BREVET EUROPEEN

(11) **EP 1 122 646 B1**
(45) Date de publication et mention de la délivrance du brevet: **23.04.2003**
(21) Numéro de dépôt: 00410009.5
(22) Date de dépôt: 31.01.2000
(51) Int. Cl.: G06F 11/25

(54) **Procédé de détection d'anomalies dans un signal**
Verfahren zum Nachweis von Anomalien in einem Signal
Method for detecting an anomaly in a signal

(43) Date de publication de la demande: 08.08.2001
(73) Titulaire: Miriad technologies, 75008 Paris (FR)
(72) Inventeur: Azencott, Robert, 75010 Paris (FR)
(74) Mandataire: de Beaumont, Michel

(56) Documents cités:
- US-A- 5 742 522
- YAU C W: "ILIAD: A COMPUTER-AIDED DIAGNOSIS AND REPAIR SYSTEM" PROCEEDINGS OF THE INTERNATIONAL TEST CONFERENCE,US,WASHINGTON, IEEE COMP. SOC. PRESS, vol. CONF. 18, 1 septembre 1987 (1987-09-01), pages 890-898, XP000745828
- UPADHYAYA B R ET AL: "MULTIVARIATE STATISTICAL SIGNAL PROCESSING TECHNIQUE FOR FAULT DETECTION AND DIAGNOSTICS*" ISA TRANSACTIONS,US,INSTRUMENT SOCIETY OF AMERICA. PITTSBURGH, vol. 29, no. 4, 1990, pages 79-95, XP000175652 ISSN: 0019-0578

## Description

La présente invention concerne un procédé de détection d'anomalies dans un signal numérisé.

Dans le cadre de processus industriels ou lors du fonctionnement de machines, il peut être utile de surveiller si le déroulement des opérations est normal ou anormal. Par exemple, dans un processus industriel, on placera divers capteurs en divers points d'une chaîne de fabrication pour enregistrer par exemple des débits, des pressions, des températures... et suivre leurs variations. Dans un engin, par exemple une automobile, un avion, une fusée, on pourra disposer des capteurs sur divers organes propulsifs ou au voisinage de ceux-ci pour analyser des caractéristiques de fonctionnement de l'engin. Ici encore les capteurs peuvent être des capteurs de débit, de température, de pression, de vitesse, etc. De même, on pourra chercher à analyser les caractéristiques d'un produit en cours de fabrication, par exemple dans les domaines de la chimie, de la pharmacie, de l'agro-alimentaire. On pourra également surveiller l'apparition d'éventuelles anomalies structurelles dans un bâtiment ou un ouvrage d'art par des capteurs de vibration. Dans tous ces cas, des capteurs fourniront une analyse en continu de divers paramètres de fabrication, de fonctionnement, de structure ou de formulation.

Plus généralement, on sera intéressé à détecter la présence d'anomalies dans tout signal sujet à fluctuation ou dans toute transmission informatisée de flux de données numérisées telles que : trafic voyageurs, indicateurs de trafic en téléphonie mobile, etc.

Dans l'état de la technique, une méthode connue de détection d'anomalies dans un signal consiste à procéder à de nombreux essais préliminaires, à enregistrer un grand nombre de signaux, à analyser le fonctionnement du processus associé, à identifier des signaux comportant une ou plusieurs anomalies correspondant à des dysfonctionnements du processus, et à enregistrer des signaux normaux, ne comportant pas ces anomalies et correspondant à un fonctionnement normal du processus. Un calcul itératif basé sur un réseau de neurones artificiels, permet d'apprendre à discriminer un signal comportant des anomalies d'un signal normal. On peut ensuite, en utilisant cet apprentissage expérimental identifier des phases de signaux anormales.

Un handicap majeur de cette méthode provient du fait que l'apprentissage mis en oeuvre est très lent et nécessite de réaliser un grand nombre d'essais et de disposer d'un grand nombre d'exemples de signaux comportant les anomalies à détecter. Une telle méthode ne peut notamment pas être mise en oeuvre pour des analyses de signaux qui surviennent de façon relativement rare, par exemple, l'analyse des premiers instants caractérisant le décollage d'une fusée ou de signaux qui ne comportent des anomalies que de façon tout à fait exceptionnelle par exemple des signaux de surveillance de circuit de refroidissement de centrale nucléaire.

Un autre inconvénient de cette méthode résulte du fait que le programme de calcul du réseau de neurones artificiels utilisé sera spécifique du signal analysé et ne pourra pas être appliqué à la détection d'une anomalie sur un signal d'une autre nature. Ainsi, pour chaque signal à analyser, il faudra prévoir un programme de calcul spécifique et un temps de programmation correspondant.

Un objet de la présente invention est de prévoir un procédé de détection d'anomalies palliant les inconvénients des procédés de l'art antérieur.

Un objet plus particulier de la présente invention est de prévoir un tel procédé applicable à la détection d'anomalies dans des signaux pour lesquels on ne dispose d'aucun échantillon préalable d'anomalies.

Un autre objet de la présente invention est de prévoir un tel procédé dans lequel on puisse découvrir par un apprentissage automatique, non supervisé, des anomalies d'un signal sans recourir à des essais préalables sur d'éventuels dysfonctionnements du processus auquel ce signal est associé, et sans que l'utilisateur doive fournir des exemples ou des listes d'anomalies possibles.

Un autre objet de la présente invention est de prévoir un tel procédé dans lequel on puisse mettre en forme par un paramétrage automatique non supervisé pour détecter ensuite des anomalies par une analyse statistique ou par comparaison avec des types d'anomalies mémorisés.

L'invention vise aussi bien un signal continu qu'un signal oscillatoire. Ce signal peut provenir en temps réel d'un capteur d'une variable d'un système (température, pression, vibration, bruit, signal d'analyse spectrographique, signal d'analyse aux rayons X....). Le signal peut également être un signal d'un tel capteur enregistré dans une base de données numériques. Il pourra également s'agir d'autres types de signaux enregistrés dans une base de données numériques, par exemple, comme cela a été indiqué, un signal caractérisant l'évolution d'une suite de données représentant une information quelconque dont on souhaite analyser les variations, par exemple des données résultant d'analyses statistiques, d'indicateurs de trafic voyageurs ou véhicules, etc.

De façon générale, selon l'invention on analyse de façon statistique des caractéristiques géométriques complexes, fréquentielles ou temporelles, d'une partie initiale d'un signal pour permettre de reconnaître ensuite une anomalie sur n'importe quelle portion ultérieure du même signal. Cette portion ultérieure du même signal peut correspondre à une séquence disjointe d'un signal de même type. Par exemple, si l'on a analysé le décollage d'une fusée, on pourra pour chacun des signaux considérés utiliser des informations recueillies lors de l'analyse d'une première fusée pour caler les paramètres initiaux de l'analyse du décollage de la fusée suivante.

Plus particulièrement, pour atteindre les objets susmentionnés, la présente invention prévoit un procédé de détection d'anomalies dans un signal complexe numérisé analysé par un module de détection, comportant une étape d'apprentissage automatique incluant un paramétrage d'un système de compression automatique ledit apprentissage étant basé sur une partie initiale d'un signal pour permettre de reconnaître ensuite une anomalie sur n'importe quelle portion ultérieure du même signal, et une étape de diagnostic de l'intensité et/ou de la rareté de ladite anomalie,
l'apprentissage comprenant les étapes suivantes :
1.1 sélectionner une succession de séquences de valeurs du signal analysé correspondant à une succession de fenêtres temporelles (Fₖ) ;
1.2 transformer le signal de chacune des fenêtres pour en extraire des caractéristiques d'un type facilement discerné par l'oeil humain pour former un premier vecteur (Dₖ) de dimension n ; et
1.3 réduire le nombre n de données numériques par une compression automatique du premier vecteur (Dₖ) de manière à fournir un deuxième vecteur à coordonnées sensiblement indépendantes au sens probabiliste, de dimension p inférieure à n ;
le diagnostic comprenant les étapes suivantes :
2.1 appliquer les étapes 1.1 à 1.3 à une fenêtre de scrutation (Fₖ) susceptible de comporter une anomalie ;
2.2 comparer le vecteur obtenu à une référence définie selon la même structure de transformation et de compression.

Selon un mode de réalisation de la présente invention, la transformation destinée à extraire des caractéristiques du signal liées au système de vision de l'oeil humain est choisie dans le groupe comprenant une transformation de Fourier rapide (FFT), une transformation sur une base d'ondelettes de Gabor, une extraction de maxima et/ou minima, et analogue.

Selon un mode de réalisation de la présente invention, la référence est une anomalie de type prédéfini d'un signal tel qu'une bosse, un hoquet, un à-coup, une rupture de tendance, un glissement de fréquence ou analogue et un signal de diagnostic d'anomalie est fourni quand il y a coïncidence entre le vecteur obtenu et la référence.

Selon un mode de réalisation de la présente invention, la référence résulte d'un histogramme de chaque coordonnée du deuxième vecteur et en ce qu'un diagnostic d'anomalie est fourni quand un signal analysé pendant une fenêtre de scrutation s'écarte de ladite référence.

Selon un mode de réalisation de la présente invention, appliqué à un signal vibratoire numérisé,
l'apprentissage comprend les étapes suivantes :
3.1 sélectionner une succession de séquences de valeurs du signal analysé correspondant à une succession de fenêtres temporelles (Fₖ) ;
3.2 calculer, pour chaque fenêtre temporelle Fₖ, un premier vecteur (Dₖ) de dimension n représentant la densité spectrale du signal analysé ; et
3.3 réduire le nombre n de données numériques par une compression automatique du deuxième vecteur (Dₖ) de manière à obtenir un troisième vecteur de densité spectrale à coordonnées indépendantes (IDₖ) et de dimension p inférieure à n ;
le diagnostic comprend les étapes suivantes :
4.1 appliquer les étapes 3.1 à 3.3 à une fenêtre de scrutation (Fₖ) susceptible de comporter une anomalie.

Selon un mode de réalisation de la présente invention, le procédé comporte en outre :
au cours de l'apprentissage, l'étape consistant à calculer, pour j variant de 1 à p, l'histogramme Hⱼ de chaque coordonnée des troisièmes vecteurs (IDₖ), calculer pour chacune de ces coordonnées la probabilité Pⱼ(a) pour que cette coordonnée soit supérieure à a (si a est supérieur à la médiane de l'histogramme Hⱼ) ou inférieure à a (si a est inférieur à la médiane de l'histogramme Hⱼ), et déterminer une fonction Zⱼ(a) = -log[Pⱼ(a)]
au cours du diagnostic, les étapes suivantes :
   4.2 calculer la somme sur j, R = ΣZⱼ(IDₖⱼ), pour cette fenêtre de scrutation (Fₖ) ; et
   4.3 comparer ladite somme (R) à un seuil d'intensité ou de rareté prédéfini par l'utilisateur.

Selon un mode de réalisation de la présente invention, le procédé comporte en outre une étape consistant à lisser le premier vecteur (Dₖ) de manière à définir un deuxième vecteur de densité spectrale lissée (LDₖ) et à appliquer les étapes 3.2 et 3.3 au vecteur (LDₖ).

Selon un mode de réalisation de la présente invention, le procédé comporte en outre les étapes consistant à :
déterminer un bruit spectral (Bₖ = Dₖ-LDₖ) _{;}
calculer, pour chaque bruit spectral (Bₖ), un vecteur de points extrêmes (EXTRₖ) dont les coordonnées sont supérieures à une valeur a*σₖ, où a est un entier prédéterminé supérieur à 4 dépendant du module de détection utilisé et σₖ est l'écart type du bruit spectral (Bₖ) ; et
traiter ce vecteur comme ledit deuxième vecteur.

Selon un mode de réalisation de la présente invention, appliqué à un signal continu numérisé,
l'apprentissage comprend les étapes suivantes :
5.1 sélectionner une succession de séquences de n valeurs numériques du signal analysé correspondant à une succession de fenêtres temporelles (Fₖ), chaque séquence de n valeurs définissant un premier vecteur (Sₖ) de dimension n ;
5.2 lisser, par exemple, par moyennes mobiles, le vecteur (Sₖ) pour extraire les points représentant la tendance non linéaire du signal analysé, ce qui définit un deuxième vecteur (LSₖ);
5.3 calculer le produit scalaire de chaque deuxième vecteur (LSₖ) avec une base d'ondelettes de GABOR, de manière à associer à chaque fenêtre de scrutation (Fₖ) un troisième vecteur (RGSₖ) de coefficients de GABOR de dimension inférieure à celle du vecteur (LSₖ) ;
5.4 réduire le nombre n de données numériques par une compression automatique du troisième vecteur (RGSₖ) de manière à obtenir un quatrième vecteur à coordonnées indépendantes (IRGVₖ) de dimension p inférieure à n ;
le diagnostic comprend les étapes suivantes :
6.1 appliquer les étapes 5.1 à 5.4 à une fenêtre de scrutation (Fₖ) susceptible de comporter une anomalie.

Selon un mode de réalisation de la présente invention, le procédé comporte en outre :
au cours de d'apprentissage, l'étape consistant à calculer, pour j variant de 1 à p, l'histogramme Hⱼ de chaque coordonnée de chaque quatrième vecteur (IRGVₖ), calculer pour chacune de ces coordonnées (IRGVₖⱼ) la probabilité Pⱼ(a) pour que cette coordonnée soit supérieure à a (si a est supérieur à la médiane de l'histogramme Hⱼ) ou inférieure à a (si a est inférieur à la médiane de l'histogramme Hⱼ), et déterminer une fonction Zⱼ(a) = -log[Pⱼ(a)],
au cours du diagnostic les étapes suivantes :
   6.2 calculer la somme sur j, R = ΣZⱼ(IRGVₖⱼ), pour chaque fenêtre de scrutation (Fₖ) ; et
   6.3 comparer ladite somme R à un seuil d'intensité ou de rareté prédéfini par l'utilisateur.

Selon un mode de réalisation de la présente invention, la compression automatique est du type compression par analyse en composantes principales.

Selon un mode de réalisation de la présente invention, la compression automatique est une compression par réseau de neurones artificiels en diabolo.

Selon un mode de réalisation de la présente invention, la compression automatique est une compression par extraction de composantes indépendantes.

Selon un mode de réalisation de la présente invention, le procédé est appliqué à des signaux de capteurs de vibration.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1A représente un organigramme illustrant schématiquement les étapes du procédé selon l'invention appliqué à un signal vibratoire ;
la figure 1B illustre une variante du procédé ; et
la figure 2 représente un organigramme illustrant schématiquement les étapes du procédé selon l'invention appliqué à un signal continu.

Selon l'invention, étant donné un signal à analyser, ce signal est numérisé s'il n'est pas déjà sous forme numérique. Il est ensuite envoyé à un module de détection consistant essentiellement en un ordinateur convenablement programmé. Selon l'invention, une portion de signal choisie par l'utilisateur (par exemple une portion initiale du signal) est utilisée pour paramétrer le programme dans une phase qui sera appelée ici phase d'apprentissage. L'utilisateur peut sélectionner la durée de cette phase d'apprentissage après laquelle la phase de recherche d'anomalies ou de diagnostic commence.

Selon une caractéristique de l'invention qui découlera de l'exposé ci-après, l'apprentissage est un apprentissage automatique non supervisé au cours duquel on détermine des caractéristiques fréquentielles ou temporelles spécifiques du signal à analyser. L'utilisateur pourra également sélectionner initialement une typologie d'anomalies recherchées, c'est-à-dire une portion de signal de forme particulière (bosse, hoquet, à-coup, etc.) ou de type particulier (présence de pics inhabituels, glissement de fréquence, fluctuation brusque, etc.). Une anomalie pourra également ou en outre être définie comme un artefact se produisant moins d'un certain nombre de fois donné à l'intérieur d'une fenêtre temporelle, c'est-à-dire avec un degré de rareté prédéfini. On pourra également choisir de ne s'intéresser qu'à des anomalies de durée supérieure à un seuil prédéterminé.

La présente invention va être décrite plus en détail dans le cadre de deux exemples particuliers de mise en oeuvre.

### 1. TRAITEMENT PAR TRANSFORMEE DE FOURIER D'UN SIGNAL VIBRATOIRE.

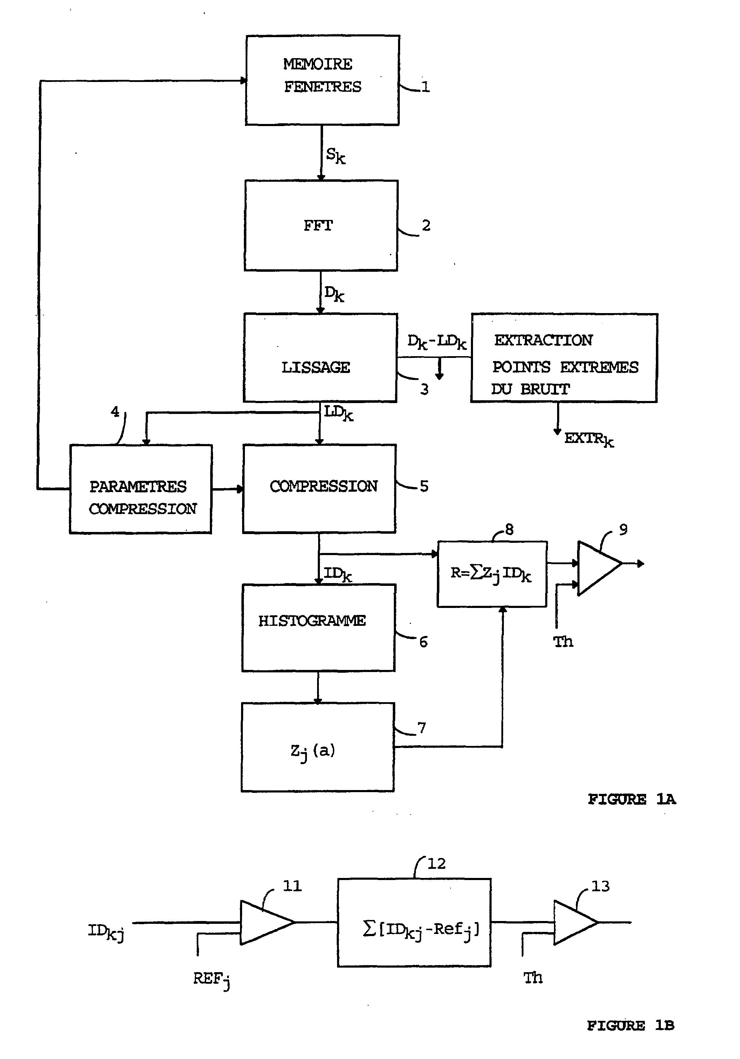

La figure 1A illustre un premier mode de réalisation de la présente invention applicable à des signaux vibratoires à fortes composantes fréquentielles. Le signal à analyser est initialement envoyé à une mémoire 1 capable de mémoriser le signal pendant la durée de f fenêtres de scrutation de durées égales. Chaque fenêtre comprend une suite de valeurs numériques constituant les coordonnées d'un vecteur Sₖ.

On passe ensuite à un bloc 2 de transformation de Fourier rapide (FFT) dans lequel à chaque suite de valeurs numériques correspondant à une fenêtre est appliquée une transformation de Fourier rapide pour définir la densité spectrale de la portion de signal Sₖ observée dans la fenêtre Fₖ. Cette densité spectrale est échantillonnée pour définir une suite de n valeurs numériques définissant un vecteur de densité spectrale Dₖ de dimension n, cette dimension n n'étant généralement pas identique à la dimension du vecteur Sₖ. Le nombre n dépend de la fréquence d'échantillonnage qui est choisie de manière à réaliser un compromis entre la durée de l'apprentissage et la précision de détection. Après cette étape, répétée pour f fenêtres, on dispose d'une matrice D = (D₁, D₂, ...Dₖ... D_{f}) à n lignes et f colonnes.

On procède optionnellement dans un bloc 3 à un lissage numérique, par exemple par moyennes mobiles, des vecteurs Dₖ, ce qui fournit une densité spectrale lissée LDₖ et un bruit spectral défini par Dₖ - LDₖ. Ce bruit pourra être analysé par ailleurs de diverses façons classiques. En outre, on prévoira de préférence un calcul de l'écart type du bruit spectral qui pourra être utilisé pour une extraction de tous les points extrêmes du bruit, c'est-à-dire toutes les coordonnées du vecteur de bruit de valeur absolue supérieure à par exemple quatre fois l'écart type. L'ensemble de ces points extrêmes du bruit à l'intérieur d'une fenêtre Fₖ constitue un vecteur EXTRₖ.

Etant donné que l'étape de lissage est optionnelle, on considérera que le traitement ci-après est appliqué aux vecteurs Dₖ mais il pourrait également être appliqué aux vecteurs lissés LDₖ et/ou aux vecteurs EXTRₖ. Dans de nombreux cas pratiques, l'analyse des vecteurs EXTRₖ donnera à l'utilisateur des informations plus utiles que l'analyse des vecteurs Dₖ qui sera décrite ci-après.

Un programme correspondant à un bloc 4 analyse la matrice D et détermine la façon dont cette matrice peut être comprimée. Une fois cette détermination achevée, le bloc 4 envoie un message au bloc mémoire 1 et fixe le paramétrage d'un bloc logique ou programme de compression 5 qui transforme les vecteurs Dₖ à n coordonnées en vecteurs IDₖ à p coordonnées, p étant inférieur à n. Cette étape de compression permet par exemple dans le cas de l'analyse de signaux vibratoires d'un moteur de passer de vecteurs Dₖ à 1024 coordonnées à des vecteurs comprimés IDₖ à moins de 100 coordonnées. Cette compression rend l'apprentissage selon l'invention réalisable avec fiabilité en un temps raisonnable. En effet, la quantité de données nécessaire à l'apprentissage considéré ici augmente de façon plus que quadratique avec la dimension du vecteur utilisé (avec 1024 coordonnées, il faudrait disposer d'un nombre d'observations de l'ordre de 10⁷ alors que avec 50 à 100 coordonnées, on tombe à des valeurs de l'ordre de 10⁴).

Dans une première variante, la compression automatique est déterminée par un procédé d'analyse en composantes principales, tel que publié dans "Multivariate Analysis", de K.V. Mardia, J.T. Kent et J.M. Bibby, Academic Press, 1979.

Dans une deuxième variante, la compression automatique est déterminée par un réseau de neurones artificiels, du type perceptron à trois couches en architecture diabolo. Cette méthode de compression est publiée dans "Auto-Association by Multilayer Perceptrons and Singular Value Décomposition" de Bourlard H. et Kamp Y., Biological cybernetics, n° 59, pp 291-294, 1988.

Dans une troisième variante, la compression automatique est déterminée par un procédé d'extraction de composantes indépendantes publié dans "Blind separation of sources I. An adaptive algorithm based on neuromimetic architecture" de C. Jutten et J. Herault, Signal Processing, 24(1) 1-10, juillet 1991 et dans "Blind signal separation : statistical principles", de Jean-François Cardoso, Proceedings of the IEEE, Vol 9, n° 10, pp 2009-2025, oct. 1998.

Ces procédés de compression permettent de déterminer itérativement, à partir des vecteurs D₁, D₂ ...Dₖ ...D_{f}, une nouvelle base, de dimension p inférieure à n, dans laquelle sont définis de nouveaux vecteurs à coordonnées sensiblement indépendantes au sens probabiliste, et donc non corrélées, ID₁, ID₂ ...IDₖ ...ID_{f}.

Le processus peut se poursuivre selon l'une et/ou l'autre de deux variantes.

Selon une première variante, on cherche à déterminer l'auto-cohérence du signal analysé. Pour cela, on poursuit l'apprentissage dont l'étape suivante correspond au bloc 6 et consiste à former les p histogrammes Hⱼ des j^{ième} coordonnées IDₖⱼ de chaque vecteur IDₖ pour j variant de 1 à p.

A l'étape suivante, bloc 7, on calcule pour chaque coordonnée la probabilité Pⱼ(a) pour que cette j^{ième} coordonnée des vecteurs Dₖ soit supérieure à a (si a est supérieur à la médiane de l'histogramme Hⱼ) ou inférieure à a (si a est inférieur à la médiane de l'histogramme Hⱼ). En d'autres termes Pⱼ(a) est la fréquence d'apparition de valeurs numériques supérieures au nombre a pour la j^{ième} coordonnée des vecteurs Dₖ, lorsque l'indice k parcourt l'ensemble de toutes les fenêtres de scrutation Fₖ. On détermine ensuite une fonction Zⱼ(a) = -log[Pⱼ(a)].

Une fois ces opérations effectuées, la période d'apprentissage proprement dite est finie et l'on passe à une phase de diagnostic ou de détection d'anomalies, au cours de laquelle on utilise pour le vecteur de chaque fenêtre le bloc de FFT, éventuellement le bloc de lissage, et le bloc de compression dont les paramètres ont été fixés par la phase de paramétrage et la fonction Zⱼ(a) déterminée lors de la phase d'apprentissage. Ainsi, à la sortie du bloc de compression 5, le vecteur IDₖ est envoyé à un bloc 8 dans lequel on réalise, pour la fenêtre de scrutation considérée, la sommation sur j : R = ΣZⱼ(IDₖⱼ). On obtient alors une valeur ou score qui est envoyé à un comparateur 9 dans lequel ce score est comparé à une valeur de référence Th qui correspond à un seuil d'intensité ou de rareté prédéfini lors d'une phase initiale de configuration du système. Une anomalie est indiquée lorsque la somme R dépassera la valeur Th.

Selon une deuxième variante, on omet l'analyse statistique automatisée réalisée dans les blocs 6 et 7 et l'on compare directement chaque vecteur IDₖ à des signatures de bruit particulières. Plus particulièrement, on cherchera à déterminer la corrélation entre des portions du signal IDₖ et des portions de signaux de référence prédéterminés correspondant par exemple à des caractéristiques fréquentielles spécifiques, telles que des glissements de fréquence, ou des combinaisons particulières de fréquence. On pourra aussi effectuer une comparaison avec la transformée de Fourier de signaux temporels que l'on cherche à identifier. Cette approche est illustrée conceptuellement en figure 1B. Les composantes IDₖⱼ d'un vecteur IDₖ sortant du bloc de compression S sont comparées à des composantes REFⱼ d'un vecteur de référence REF. Les différences IDₖⱼ-REFⱼ sont sommées sur j dans un bloc 12 et le résultat est comparé à un seuil Th dans un bloc 13 qui indique si le vecteur IDₖ de la fenêtre de scrutation Fₖ est très proche ou au contraire très éloigné du vecteur de référence REF. Bien entendu, cette opération pourra être répétée pour plusieurs vecteurs de référence prédéterminés.

La présente invention est susceptible de nombreuses variantes et modifications qui apparaîtront à l'homme de l'art. Plus particulièrement, les programmes destinés, lors de la phase d'apprentissage, à déterminer la compression optimale et la fonction Zⱼ pourront continuer à tourner pendant la phase de diagnostic de façon à améliorer le paramétrage du système de compression et la détermination des histogrammes et donc de la fonction Zⱼ. Par ailleurs, une fois un apprentissage terminé, un diagnostic peut être réalisé immédiatement pendant toute la durée ultérieure du signal ou seulement au cours de certaines fenêtres choisies de ce signal ou de répétitions ultérieures de ce signal fournies par un même système ou par un autre système théoriquement identique (on pourra ainsi recommencer un diagnostic dans une chaîne de fabrication à des instants choisis, et même éventuellement lors de journées successives alors que le fonctionnement du système a été interrompu ; il sera toutefois souhaitable de répéter périodiquement le processus d'apprentissage pour affiner les mesures).

Comme cela découle de l'exposé précédent, les étapes principales de la phase d'apprentissage automatique selon le premier mode de réalisation de l'invention consistent en :
- un découpage en fenêtres de mêmes durées du signal d'entrée,
- le passage dans le domaine fréquentiel,
- la détermination d'une compression optimale du signal, et
- la comparaison des signaux de fenêtre avec des signaux de référence résultant d'histogrammes fournissant des probabilités de dépassement de seuil de diverses composantes fréquentielles ou avec des signaux de référence prédéterminés.

Diverses variantes pourront être réalisées pour chacune de ces fonctions. Notamment, plutôt qu'un passage dans le domaine fréquentiel, on pourra réaliser un passage dans un système de coordonnées défini par des ondelettes de Gabor, ou autre, comme cela sera utilisé pour le traitement de signaux continus décrit ci-après. Au lieu de la détermination d'histogrammes, on pourra considérer plus généralement tout système estimant des probabilités de dépassement de seuil de diverses caractéristiques.

Le procédé ci-dessus peut être utilisé pour détecter des signaux sonores indésirables. Dans ce cas, le module de détection compare l'anomalie détectée à une banque de sources sonores indésirables.

### 2. TRAITEMENT DANS UN SYSTEME D'ONDELETTES DE GABOR D'UN SIGNAL CONTINU.

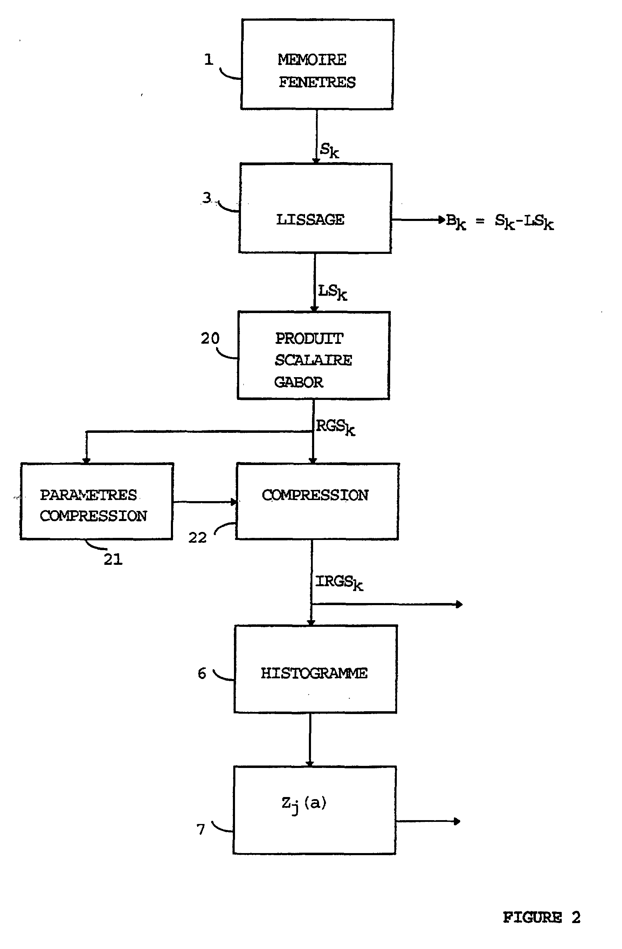

L'invention prévoit également, dans le cas où le signal à analyser n'est pas un signal oscillatoire mais un signal variant de façon relativement continue, de rester dans le domaine temporel. On pourra alors utiliser pour l'apprentissage le processus qui va être décrit en relation avec la figure 2.

La figure 2 illustre seulement l'organigramme de la phase d'apprentissage. On retrouve la même étape initiale (1) de définition de fenêtres qui est directement suivie de l'étape de lissage (3), le lissage étant maintenant nécessaire et non pas purement optionnel. Plus particulièrement, l'étape de lissage consiste à lisser, par un filtrage numérique approprié, le signal observé pour en extraire les points représentant la tendance non linéaire de ce signal. Ces points définissent un vecteur LSₖ de dimension n, n étant le nombre de valeurs numériques représentant le signal observé dans une fenêtre de scrutation Fₖ. La valeur de ce nombre dépend de la précision souhaitée et du phénomène observé.

Le lissage permet d'extraire, pour chaque fenêtre de scrutation Fₖ, une suite de valeurs numériques représentant un signal de bruit Bₖ = Sₖ-LSₖ de dimension n. Dans une variante de réalisation, l'extraction du bruit Bₖ est obtenue par lissage par moyennes mobiles, d'une façon classique. Le signal de bruit pourra fournir diverses informations utiles.

L'étape 20 suivante consiste à calculer le produit scalaire de chaque deuxième vecteur LSₖ avec une base d'ondelettes de GABOR (théorie des ondelettes publiée dans "A Wavelet tour of signal processing" Stéphane Mallat, second Edition, Academic Press, 1999). Ainsi, on associe à chaque fenêtre de scrutation Fₖ un troisième vecteur RGSₖ dont chacun des coefficients correspond à une coordonnée liée à une ondelette de GABOR. L'utilisateur du procédé aura de préférence sélectionné dans une phase initiale un ensemble précis d'ondelettes de GABOR G₁, G₂, ...Gₖ, ... G_{f} permettant la meilleure représentation de l'anomalie recherchée.

Une fois le signal défini sur un espace d'ondelettes de GABOR permettant la meilleure représentation de l'anomalie, on procède à une compression. A l'étape 21, qui est appliquée au vecteur RGSₖ, on calcule comme précédemment des paramètres de compression et l'on programme un bloc de compression 22 qui fournit un vecteur comprimé à p coordonnées indépendantes IRGSₖ.

Le vecteur IRGSₖ est traité comme dans le cadre du premier mode de réalisation. Ou bien, on calcule un histogramme d'où l'on déduit une fonction Zⱼ(a), après quoi, lors de la phase du diagnostic, on compare la somme sur j, R=ΣZⱼ.(IRGSₖⱼ), à un seuil. Ou bien on compare les coordonnées du vecteur IRGSₖ à des modèles de référence prédéterminés.

Selon une variante de réalisation du procédé, appliquée à des signaux pour lesquels on veut détecter des ruptures brusques de tendance ou des changements brusques de niveau de bruit, au lieu de partir des vecteurs Sₖ, on calcule le vecteur Wₖ = Sₖ₊₁-Sₖ, Sₖ étant le vecteur des données observées dans une fenêtre Fₖ et Sₖ₊₁ étant le vecteur des données observées dans la fenêtre Fₖ₊₁, et on applique toutes les étapes de la figure 2 au vecteur Wₖ. La détection d'anomalies se rapporte à la détection du saut brusque de tendance entre deux fenêtres successives. Ce saut est détecté par le calcul du "score" de chaque fenêtre de scrutation et la comparaison de ce score avec un seuil de référence prédéfini.

### 3. DEFINITION GENERALISEE DE L'INVENTION

On notera que les deux modes de réalisation particuliers de la présente invention décrits précédemment présentent notamment les caractéristiques générales communes suivantes :
- étude d'un signal découpé en fenêtres temporelles ;
- pas d'apprentissage préalable lié à des essais expérimentaux mais paramétrage direct d'un programme d'analyse par une étude automatisée d'une portion de signal (premiers instants par exemple) ;
- transformation choisie pour extraire des caractéristiques d'un signal d'un type facilement discerné par l'oeil humain ;
- compression du signal à la suite ou en même temps que la transformation, de façon que les opérations de paramétrage ne soient pas trop longues et que les signaux lors de la phase de diagnostic puissent ensuite être traités en direct.

En ce qui concerne la transformation, on notera en effet les points suivants.
- Une transformée de Fourier traduit des caractéristiques fréquentielles, par exemple des variations de fréquence, et ce sont là des caractéristiques auquel l'oeil humain est sensible au premier coup d'oeil en regardant une courbe.
- Le passage en coordonnées de Gabor correspond bien à des éléments de courbe reconnaissables à l'oeil. En effet les couches inférieures du cortex humain chargées de traiter les informations rétiniennes contiennent des groupements de neurones qui réalisent automatiquement des filtrages analogues aux produits scalaires avec des ondelettes de Gabor.

D'autres transformations analogues pourront être envisagées : par exemple pour un signal vibratoire, l'ensemble des maxima, convenablement interpolés pour former une courbe lisse, constitue un vecteur descriptif utile du signal, ainsi d'ailleurs que l'ensemble des minima. L'oeil humain est particulièrement réactif aux modifications de ces deux courbes.

Enfin, chacun des modes de réalisation de la présente invention permet ou bien d'analyser des caractéristiques d'auto-cohérence d'un signal, ou bien de comparer le signal à des caractéristiques prédéterminées dans le système de transformation utilisé, ce qui est particulièrement intéressant du fait, comme on l'a indiqué précédemment, que les transformations utilisées traduisent assez bien des caractéristiques discernables à l'oeil.

## Revendications

1. Procédé de détection d'anomalies dans un signal complexe numérisé analysé par un module de détection, **caractérisé en ce qu'**il comporte une étape d'apprentissage automatique incluant un paramétrage d'un système de compression automatique ledit apprentissage étant basé sur une partie initiale d'un signal pour permettre de reconnaître ensuite une anomalie sur n'importe quelle portion ultérieure du même signal, et une étape de diagnostic de l'intensité et/ou de la rareté de ladite anomalie,
l'apprentissage comprenant les étapes suivantes :
1.1 sélectionner une succession de séquences de valeurs du signal analysé correspondant à une succession de fenêtres temporelles (Fₖ) ;
1.2 transformer le signal de chacune des fenêtres pour en extraire des caractéristiques d'un type facilement discerné par l'oeil humain pour former un premier vecteur (Dₖ) de dimension n ; et
1.3 réduire le nombre n de données numériques par une compression automatique du premier vecteur (Dₖ) de manière à fournir un deuxième vecteur à coordonnées sensiblement indépendantes au sens probabiliste, de dimension p inférieure à n ;
le diagnostic comprenant les étapes suivantes :
2.1 appliquer les étapes 1.1 à 1.3 à une fenêtre de scrutation (Fₖ) susceptible de comporter une anomalie ;
2.2 comparer le vecteur obtenu à une référence définie selon la même structure de transformation et de compression.

2. Procédé selon la revendication 1, **caractérisé en ce que** la transformation destinée à extraire des caractéristiques du signal liées au système de vision de l'oeil humain est choisie dans le groupe comprenant une transformation de Fourier rapide (FFT), une transformation sur une base d'ondelettes de Gabor, une extraction de maxima et/ou minima, et analogue.

3. Procédé selon la revendication 1, **caractérisé en ce que** ladite référence est une anomalie de type prédéfini d'un signal tel qu'une bosse, un hoquet, un à-coup, une rupture de tendance, un glissement de fréquence ou analogue et **en ce qu'**un signal de diagnostic d'anomalie est fourni quand il y a coïncidence entre le vecteur obtenu et la référence.

4. Procédé selon la revendication 1, **caractérisé en ce que** ladite référence résulte d'un histogramme de chaque coordonnée du deuxième vecteur et **en ce qu'**un diagnostic d'anomalie est fourni quand un signal analysé pendant une fenêtre de scrutation s'écarte de ladite référence.

5. Procédé de détection d'anomalies selon la revendication 1, appliqué à un signal vibratoire numérisé, **caractérisé en ce que** :
l'apprentissage comprend les étapes suivantes :
3.1 sélectionner une succession de séquences de valeurs du signal analysé correspondant à une succession de fenêtres temporelles (Fₖ);
3.2 calculer, pour chaque fenêtre temporelle Fₖ, un premier vecteur (Dₖ) de dimension n représentant la densité spectrale du signal analysé ; et
3.3 réduire le nombre n de données numériques par une compression automatique du deuxième vecteur (Dₖ) de manière à obtenir un troisième vecteur de densité spectrale à coordonnées indépendantes (IDₖ) et de dimension p inférieure à n ;
le diagnostic comprend les étapes suivantes :
4.1 appliquer les étapes 3.1 à 3.3 à une fenêtre de scrutation (Fₖ) susceptible de comporter une anomalie.

6. Procédé selon la revendication 5, **caractérisé en ce qu'**il comporte en outre :
au cours de l'apprentissage, l'étape consistant à calculer, pour j variant de 1 à p, l'histogramme Hⱼ de chaque coordonnée des troisièmes vecteurs (IDₖ), calculer pour chacune de ces coordonnées la probabilité Pⱼ(a) pour que cette coordonnée soit supérieure à a (si a est supérieur à la médiane de l'histogramme Hⱼ) ou inférieure à a (si a est inférieur à la médiane de l'histogramme Hⱼ), et déterminer une fonction Zⱼ(a) = -log[Pⱼ(a)]
au cours du diagnostic, les étapes suivantes :
4.2 calculer la somme sur j, R = ΣZⱼ(IDₖⱼ), pour cette fenêtre de scrutation (Fₖ) ; et
4.3 comparer ladite somme (R) à un seuil d'intensité ou de rareté prédéfini par l'utilisateur.

7. Procédé selon la revendication 6, **caractérisé en ce qu'**il comporte en outre une étape consistant à lisser le premier vecteur (Dₖ) de manière à définir un deuxième vecteur de densité spectrale lissée (LDₖ) et à appliquer les étapes 3.2 et 3.3 au vecteur (LDₖ).

8. Procédé selon la revendication 6, **caractérisé en ce qu'**il comporte en outre les étapes consistant à :
déterminer un bruit spectral (Bₖ = Dₖ-LDₖ) ;
calculer, pour chaque bruit spectral (Bₖ), un vecteur de points extrêmes (EXTRₖ) dont les coordonnées sont supérieures à une valeur a*σₖ, où a est un entier prédéterminé supérieur à 4 dépendant du module de détection utilisé et σₖ est l'écart type du bruit spectral (Bₖ) ; et
traiter ce vecteur comme ledit deuxième vecteur.

9. Procédé de détection d'anomalies selon la revendication 1, appliqué à un signal continu numérisé, **caractérisé en ce que**
l'apprentissage comprend les étapes suivantes :
5.1 sélectionner une succession de séquences de n valeurs numériques du signal analysé correspondant à une succession de fenêtres temporelles (Fₖ), chaque séquence de n valeurs définissant un premier vecteur (Sₖ) de dimension n ;
5.2 lisser, par exemple, par moyennes mobiles, le vecteur (Sₖ) pour extraire les points représentant la tendance non linéaire du signal analysé, ce qui définit un deuxième vecteur (LSₖ) ;
5.3 calculer le produit scalaire de chaque deuxième vecteur (LSₖ) avec une base d'ondelettes de GABOR, de manière à associer à chaque fenêtre de scrutation (Fₖ) un troisième vecteur (RGSₖ) de coefficients de GABOR de dimension inférieure à celle du vecteur (LSₖ) ;
5.4 réduire le nombre n de données numériques par une compression automatique du troisième vecteur (RGSₖ) de manière à obtenir un quatrième vecteur à coordonnées indépendantes (IRGVₖ) de dimension p inférieure à n ;
le diagnostic comprend les étapes suivantes :
6.1 appliquer les étapes 5.1 à 5.4 à une fenêtre de scrutation (Fₖ) susceptible de comporter une anomalie.

10. Procédé selon la revendication 9, **caractérisé en ce qu'**il comporte en outre :
au cours de l'apprentissage, l'étape consistant à calculer, pour j variant de 1 à p, l'histogramme Hⱼ de chaque coordonnée de chaque quatrième vecteur (IRGVₖ), calculer pour chacune de ces coordonnées (IRGVₖⱼ) la probabilité Pⱼ(a) pour que cette coordonnée soit supérieure à a (si a est supérieur à la médiane de l'histogramme Hⱼ) ou inférieure à a (si a est inférieur à la médiane de l'histogramme Hⱼ), et déterminer une fonction Zⱼ(a) = -log[Pⱼ(a)],
au cours du diagnostic les étapes suivantes :
6.2 calculer la somme sur j, R = ΣZⱼ(IRGVₖⱼ), pour chaque fenêtre de scrutation (Fₖ) ; et
6.3 comparer ladite somme R à un seuil d'intensité ou de rareté prédéfini par l'utilisateur.

11. Procédé selon l'une des revendications 5 ou 9, **caractérisé en ce que** la compression automatique est du type compression par analyse en composantes principales.

12. Procédé selon l'une des revendications 5 ou 9, **caractérisé en ce que** la compression automatique est une compression par réseau de neurones artificiels en diabolo.

13. Procédé selon l'une des revendications 5 ou 9, **caractérisé en ce que** la compression automatique est une compression par extraction de composantes indépendantes.

14. Procédé selon la revendication 5, **caractérisé en ce qu'**il est appliqué à des signaux de capteurs de vibration.

## Patentansprüche

1. Verfahren zur Detektion von Anomalien in einem durch einen Detektionsmodul analysierten komplexen digitalisierten Signal, **dadurch gekennzeichnet , dass** es eine Verfahrensstufe zum automatischen Lernen einschließlich einer Parametrierung eines automatischen Kompressionssystems umfasst, wobei dieser Lernvorgang auf einem Anfangsteil eines Signals beruht um sodann eine Anomalie in einem beliebigen weiteren Teil desselben Signals erkennen zu können, und dass es eine Verfahrensstufe zur Diagnose der Intenität und/oder der Seltenheit der genannten Anomalie umfasst,
wobei die Lernstufe die folgenden Schritte umfasst:
1.1 Auswählen einer Aufeinanderfolge von Sequenzen von Werten des analysierten Signals, entsprechend einer Aufeinanderfolge von Zeitfenstern (Fₖ);
1.2 Transformation des Signals von jedem der Fenster, um hieraus charakteristische Eigenschaften eines für das menschliche Auge leicht unterscheidbaren Typs zu extrahieren, zur Bildung eines ersten Vektors (Dₖ) mit Dimension n; sowie
1.3 Verringern der Zahl n numerischer Daten durch eine automatische Kompression des ersten Vektors (Dₖ), derart dass ein zweiter Vektor mit im probabilistischen Sinne im wesentlichen unabhängigen Koordinaten, von Dimension p kleiner als n gebildet wird;
und wobei die Diagnose die folgenden Schritte umfasst:
2.1 Anwenden der Verfahrensschritte 1.1 bis 1.3 auf ein Prüf-und Abfragefenster (Fₖ), das eine Anomalie enthalten kann;
2.2 Vergleichen des erhaltenen Vektors mit einer gemäß derselben Transformations- und Kompressionsstruktur definierten Referenz.

2. Verfahren nach Anspruch 1, **dadurch gekennzeichnet , dass** die zur Extraktion von mit dem visuellen System des menschlichen Auges verknüpften charakteristischen Eigenschaften des Signals bestimmte Transformation aus der Gruppe gewählt ist, welche eine schnelle FourierTransformation (FFT, fast Fourier transformation), eine Transformation auf der Grundlage von GABOR-Wellen, eine Maxima-und/oder Minima-Extraktion, und dgl. umfasst.

3. Verfahren nach Anspruch 1, **dadurch gekennzeichnet, dass** die genannte Referenz eine Anomalie vorgegebenen Typs eines Signals wie beispielsweise ein Höcker, ein Schlucker, ein Ruck bzw. Stoß, ein Trendbruch, eine Frequenzverschiebung oder dgl. ist und dass ein Anomalie-Diagnosesignal gebildet wird, wenn eine Koinzidenz zwischen dem erhaltenen Vektor und der Referenz vorliegt.

4. Verfahren nach Anspruch 1, **dadurch gekennzeichnet, dass** die genannte Referenz sich aus einem Histogramm jeder Koordinate des zweiten Vektors ergibt und dass eine Anomaliediagnose gebildet wird, wenn ein analysiertes Signal sich während einem Prüf-und Abfragefenster von der genannten Referenz entfernt.

5. Verfahren nach Anspruch 1, in Anwendung auf ein digitalisiertes Schwingungssignal, **dadurch gekennzeichnet, dass**:
der Lernvorgang die folgenden Schritte bzw. Stufen umfasst:
3.1 Auswählen einer Aufeinanderfolge von Sequenzen von Werten des analysierten Signals, entsprechend einer Aufeinanderfolge von Zeitfenstern (Fₖ);
3.2 für jedes Zeitfenster (Fₖ) Berechnen eines ersten Vektors (Dₖ) der Dimension n, welcher die Spektraldichte des analysierten Signals wiedergibt; sowie
3.3 Verringern der Zahl n digitaler Daten durch eine automatische Kompression des zweiten Vektors (Dₖ), derart dass ein dritter Spektraldichte-Vektor (IDₖ) mit unabhängigen Koordinaten und der Dimension p kleiner als n erhalten wird;
das Diagnoseverfahren die folgenden Schritte bzw. Stufen umfasst:
4.1 Anwenden der Stufen 3.1 bis 3.3 auf ein Prüf-bzw. Abfragefenster ('polling Fenster') (Fₖ), das der Möglichkeit einer Anomalie unterliegt.

6. Verfahren nach Anspruch 5, **dadurch gekennzeichnet, dass** es des weiteren umfasst:
im Ablauf des Lernvorgangs die Verfahrensstufe, wonach für j von 1 bis p das Histogramm Hⱼ jeder Koordinate der dritten Vektoren (IDₖ) berechnet wird, für jede dieser Koordinaten die Wahrscheinlichkeit Pⱼ(a) dafür berechnet wird, dass diese Koordinate größer als a ist (wenn a größer als der Medianwert des Histogramms Hⱼ ist), oder dass diese Koordinate kleiner als a ist (wenn a kleiner als der Medianwert des Histogramms ist), und eine Funktion Zⱼ(a) = -log [Pⱼ(a)] bestimmt wird
im Ablauf des Diagnoseverfahrens die folgenden Schritte bzw. Stufen:
4.2 Berechnen der Summe (über j) R = Σ Zⱼ (IDₖⱼ für dieses Prüf-bzw. Abfragefenster (Fₖ); sowie
4.3. Vergleichen der genannten Summe R mit einem von dem Benutzer vorgegebenen Schwellwert der Intensität oder der Seltenheit.

7. Verfahren nach Anspruch 6, **dadurch gekennzeichnet, dass** es des weiteren eine Stufe umfasst, welche in einer Glättung des ersten Vektors (Dₖ) besteht, derart das ein zweiter Vektor (LDₖ) der geglätteten Spektraldichte definiert wird, und in der Anwendung der Stufen 3.2 und 3.3 auf diesen Vektor (LDₖ).

8. Verfahren nach Anspruch 6, **dadurch gekennzeichnet, dass** es des weiteren die Schritte bzw. Sufen umfasst, die bestehen aus:
Bestimmen eines spektralen Rauschens (Bₖ = Dₖ-LDₖ);
für jedes spektrale Rauschen Berechnen eines Extrempunkt-Vektors (EXTRₖ), dessen Koordinaten größer als ein Wert a*σₖ ist, worin a eine vorgegebene ganze Zahl größer als 4 abhängig vom jeweils verwendeten Detektions-Modul ist und σₖ die Standardabweichung des spektralen Rauschens (Bₖ) ist; sowie
Verarbeiten dieses Vektors wie den zweiten Vektor.

9. Verfahren zur Detektion von Anomalien, nach Anspruch 1, in Anwendung auf ein kontinuierliches digitalisiertes Signal, **dadurch gekennzeichnet, dass**:
der Lernvorgang die folgenden Stufen bzw. Schritte umfasst:
5.1 Auswählen einer Aufeinanderfolge von Sequenzen von n digitalisierten Werten des analysierten Signals entsprechend einer Aufeinanderfolge von Zeitfenstern (Fₖ), wobei jeweils jede Sequenz von n Werten einen ersten Vektor (Sₖ) mit Dimension n definiert;
5.2 Glätten des Vektors (Sₖ), beispielsweise mit Hilfe beweglicher Mittel, zur Extraktion der die nicht-lineare Tendenz des analysierten Signals wiedergebenden Punkte, was einen zweiten Vektor (LSₖ) definiert;
5.3 Berechnen des skalaren Produkts aus jeweils jedem zweiten Vektor (LSk) mit einer Basis von GABOR-Wellungen, derart dass jeweils jedem Prüf-bzw. Abfragefenster (Fₖ) ein dritter Vektor (RGSₖ) von GABOR- Koeffizienten mit einer Dimension kleiner als die des Vektors (LSₖ) zugeordnet wird;
5.4 Verringern der Anzahl n digitaler Daten durch eine automatische Kompression des dritten Vektors (RGSₖ), um so einen vierten Vektor (IRGVₖ) mit unabhängigen Koordinaten, der Dimension p kleiner als n zu erhalten;
das Diagnoseverfahren die folgenden Schritte bzw. Stufen umfasst:
6.1 Anwenden der Schritte 5.1 bis 5.4 auf ein Prüf-bzw. Abfragefenster (Fₖ), das der Möglichkeit einer Anomalie unterliegt.

10. Verfahren nach Anspruch 9, **dadurch gekennzeichnet, dass** es des weiteren umfasst:
im Ablauf des Lernvorgangs die Verfahrensstufe, wonach, für j von 1 bis p, das Histogramm Hⱼ jeweils jeder Koordinate von jedem vierten Vektor (IRGVₖ) berechnet wird, für jeweils jede dieser Koordinaten (IRGVₖⱼ) die Wahrscheinlichkeit Pⱼ(a) dafür berechnet wird, dass diese Koordinate größer als a ist (wenn a größer als der Medianwert des Histogramms Hⱼ ist), oder dass sie kleiner als a ist (wenn a kleiner als der Medianwert des Histogramms Hⱼ ist), und eine Funktion Zⱼ(a) = -log [Pⱼ(a)] bestimmt wird;
im Ablauf des Diagnoseverfahrens die folgenden Schritte bzw. Stufen:
6.2 Berechnen der Summe (über j) R = Σ Zⱼ(IRGVₖⱼ) für jedes Prüf-bzw. Abfragefenster (Fₖ); sowie
6.3 Vergleichen der genannten Summe R mit einem vom Anwender vorbestimmten Schwellwert der Intensität oder der Seltenheit .

11. Verfahren nach einem der Ansprüche 5 oder 9, **dadurch gekennzeichnet, dass** die automatische Kompression eine Kompression vom Typ Kompression durch Analyse in Hauptkomponenten ist.

12. Verfahren nach einem der Ansprüche 5 oder 9, **dadurch gekennzeichnet, dass** die automatische Kompression eine diabolo Kompression mittels künstlichem Neuronennetz ist.

13. Verfahren nach einem der Ansprüche 5 oder 9, **dadurch gekennzeichnet, dass** die automatische Kompression eine Kompression mittels Extraktion unabhängiger Komponenten ist.

14. Verfahren nach Anspruch 5, **dadurch gekennzeichnet, dass** es auf Signale von Schwingungsmesswertgebern angewendet wird.

## Claims

1. A method for detecting anomalies in a digitized complex signal analyzed by a detection unit, **characterized in that** it includes a machine learning step including a parameterizing of an automatic compression system, said learning being based on an initial portion of the signal so as to make it possible to recognize an anomaly on any subsequent portion of the same signal, and a step of diagnosis of the intensity and/or the rarity of said anomaly,
the learning including the steps of:
1.1 selecting a succession of sequences of values of the analyzed signal corresponding to a succession of time windows (Fₖ);
1.2 transforming the signal of each of the windows to extract therefrom characteristics of a type easily extracted by a human eye to form a first vector (Dₖ) of dimension n; and
1.3 reducing number n of digital data by an automatic compression of the first vector (Dₖ) to provide a second vector with coordinates substantially independent in probabilistic terms, of dimension p smaller then n;
the diagnosis including the steps of:
2.1 applying steps 1.1 to 1.3 to a polling window (Fₖ) likely to include an anomaly;
2.2 comparing the obtained vector with a reference defined according to the same transformation and compression structure.

2. The method of claim 1, **characterized in that** the transformation intended for extracting signal characteristics associated with the human eye vision system is chosen from the group including a fast Fourier transform (FFT), a transform on a Gabor-wavelet base, a maxima and/or minima extraction, and the like.

3. The method of claim 1, **characterized in that** the reference is an anomaly of predefined type of a signal such as a hump, a hiccup, a jolt, a trend change, a frequency shift or the like and **in that** an anomaly diagnosis signal is provided when there is a coincidence between the obtained vector and the reference.

4. The method of claim 1, **characterized in that** the reference results from a histogram of each coordinate of the second vector and **in that** an anomaly diagnosis is provided when a signal analyzed during a polling window deviates from said reference.

5. The anomaly detection method of claim 1, applied to a digitized vibrating signal, **characterized in that**:
the learning includes the steps of:
3.1 selecting a succession of sequences of values of the analyzed signal corresponding to a succession of time windows (Fₖ);
3.2 calculating, for each time window (Fₖ), a first vector (Dₖ) of dimension n representing the spectral density of the analyzed signal; and
3.3 reducing number n of digital data by an automatic compression of the second vector (Dₖ) to obtain a third spectral density vector with independent coordinates (IDₖ) and of dimension p smaller than n;
the diagnosis includes the steps of:
4.1 applying steps 3.1 to 3.3 to a polling window (Fₖ) likely to include an anomaly.

6. The method of claim 5, **characterized in that** it further includes:
during the learning, the step of calculating, for j varying from 1 to p, the histogram Hⱼ of each coordinate of the third vectors (IDₖ), calculating for each of these coordinates the probability Pⱼ(a) for this coordinate to be greater than a (if a is greater than the median of histogram Hⱼ) or smaller than a (if a is smaller than the median of histogram Hⱼ), and determining a function Zⱼ(a) = - log[Pⱼ(a)],
during the diagnosis, the steps of:
4.2 calculating the sum over j, R = ΣZⱼ(IDₖⱼ), for this polling window (Fₖ); and
4.3 comparing said sum (R) with an intensity or rarity threshold predefined by the user.

7. The method of claim 6, **characterized in that** it further includes a step of smoothing the first vector (Dₖ) to define a second vector of smoothed spectral density (LDₖ) and applying steps 3.2 and 3.3 to the vector (LDₖ).

8. The method of claim 6, **characterized in that** it further includes the steps of:
determining a spectral noise (Bₖ = Dₖ-LDₖ);
calculating, for each spectral noise (Bₖ), an apse vector (EXTRₖ), the coordinates of which are greater than a value a*σₖ, where a is a predetermined integer greater than 4 depending on the detection unit used and σₖ is the standard deviation of the spectral noise (Bₖ); and
processing this vector like said second vector.

9. The anomaly detection method of claim 1, applied to a digitized continuous signal, **characterized in that**:
the learning includes the steps of:
5.1 selecting a succession of sequences of n digital values of the analyzed signal corresponding to a succession of time windows (Fₖ), each sequence of n values defining a first vector (Sₖ) of dimension n;
5.2 smoothing, for example by sliding averages, the vector (Sₖ) to extract the points representing the non-linear tendency of the analyzed signal, which defines a second vector (LSₖ);
5.3 calculating the scalar product of each second vector (LSₖ) with a GABOR wavelet base, to associate with each polling window (Fₖ) a third vector (RGSₖ) of GABOR coefficients of dimension smaller than that of the vector (LSₖ);
5.4 reducing the number n of digital data by an automatic compression of the third vector (RGSₖ) to obtain a fourth vector with independent coordinates (IRGVₖ) of dimension p smaller than n;
the diagnosis includes the steps of:
6.1 applying steps 5.1 to 5.4 to a polling window (Fₖ) likely to include an anomaly.

10. The method of claim 9, **characterized in that** it further includes:
during the learning, the step of calculating, for j varying from 1 to p, the histogram Hⱼ of each coordinate of each fourth vector (IRGVₖ), calculating for each of these coordinates (IRGVₖⱼ) the probability Pⱼ(a) for this coordinate to be greater than a (if a is greater than the median of histogram Hⱼ) or smaller than a (if a is smaller than the median of histogram Hⱼ), and determining a function Zⱼ(a) = -log[Pⱼ(a)],
during the diagnosis, the steps of:
6.2 calculating the sum over j, R = ΣZⱼ(IRGVₖⱼ), for this polling window (Fₖ); and
6.3 comparing said sum (R) with an intensity or rarity threshold predefined by the user.

11. The method of any of claims 5 or 9, **characterized in that** the automatic compression is of the main component analysis compression type.

12. The method of any of claims 5 or 9, **characterized in that** the automatic compression is a compression by diabolo neural network compression.

13. The method of any of claims 5 or 9, **characterized in that** the automatic compression is a compression by extraction of independent components.

14. The method of claim 5, **characterized in that** it is applied to vibration sensor signals.
